# DEMANDE DE BREVET EUROPEEN

(11) **EP 3 110 109 A1**
(43) Date de publication de la demande: **28.12.2016**
(21) Numéro de dépôt: 16173521.2
(22) Date de dépôt: 08.06.2016
(51) Int. Cl.: H04L 29/08, H04M 1/725

(54) **PROCÉDÉ ET DISPOSITIF DE MISE À JOUR DES CAPACITÉS D'UN OBJET CONNECTÉ À UN RÉSEAU DE COMMUNICATIONS**

(30) Priorité: 24.06.2015 FR 1555798
(71) Demandeur: Orange, 75015 Paris (FR)
(72) Inventeur: ZIMMERMANN, Julien, COLOMBELLES (FR); BERTIN, Emmanuel, 14530 LUC-SUR-MER (FR); CAZEAUX, Stéphane, 14280 AUTHIE (FR)
(74) Mandataire: Fontenelle, Sandrine

(57) **Abrégé**

Le procédé est destiné à être mis en oeuvre par un premier objet connecté à un réseau de communications et comprend :
- une étape de fourniture (E10), via le réseau de communications, d'informations représentatives de capacités du premier objet, ces capacités comprenant des capacités liées à un environnement d'exécution du premier objet ;
- une étape de réception (F10) via le réseau de communications, d'informations représentatives de capacités d'un deuxième objet connecté au réseau de communications, lesdites informations identifiant au moins une fonction mise en oeuvre par le deuxième objet ;
- une étape d'obtention (E40) d'un module logiciel (COBJ2) adapté au premier objet et apte à exécuter, dans l'environnement d'exécution du premier objet en utilisant des données échangées avec le deuxième objet, une fonction mise en oeuvre par le deuxième objet.

## Description

### Arrière-plan de l'invention

L'invention se rapporte au domaine général des systèmes de communication.

Elle s'intéresse plus particulièrement à l'évolutivité de ces systèmes de communication.

De nombreux systèmes de communication sont conçus autour de liens physiques ou virtuels entre différents équipements ou objets. Ces équipements communiquent entre eux via l'emploi de protocoles d'échange de données physiques, normalisés ou propriétaires. Ainsi, par exemple, un système de communication audio/vidéo comporte une unité de calcul ou de traitement, dépendante d'un système d'exploitation, ainsi que différents périphériques physiquement raccordés au système.

La durée de vie d'un tel système est typiquement liée à la capacité de ses équipements à résister à un saut technologique. Une forte adhérence existe donc entre les équipements dès la conception du système, rendant compliquée la tâche consistant à faire évoluer ce système par adjonction par exemple de nouvelles capacités.

### Objet et résumé de l'invention

L'invention permet d'améliorer cette situation en proposant une solution s'appuyant sur des objets connectés. De façon connue, de tels objets sont des dispositifs matériels et/ou logiciels connectés à un réseau de communications, tel que par exemple au réseau public Internet, et peuvent par ce biais communiquer avec d'autres systèmes pour obtenir et/ou fournir de l'information. Aucune limitation n'est attachée à la nature de ces objets, il peut s'agir par exemple d'un téléphone, d'une imprimante, d'un écran, d'un capteur, d'un microphone, d'une application logicielle, etc., ni à la façon dont ces objets sont connectés au réseau (ex. liaison filaire, radio, etc.).

Plus précisément, l'invention propose un procédé de mise à jour des capacités d'un premier objet connecté à un réseau de communications, destiné à être mis en oeuvre par ce premier objet et comprenant :
- une étape de fourniture, via le réseau de communications, d'informations représentatives de capacités du premier objet (ex. ressource(s) matérielle(s) et logicielle(s) équipant le premier objet et lui permettant d'assurer sa ou ses fonctions, langages supportés, identifiant, etc.), ces capacités comprenant des capacités liées à un environnement d'exécution du premier objet ;
- une étape de réception via le réseau de communications, d'informations représentatives de capacités d'un deuxième objet connecté au réseau de communications (ex. ressource(s) matérielle(s) et logicielle(s) équipant le deuxième objet et lui permettant d'assurer sa ou ses fonctions, langages supportés, identifiant, etc.), lesdites informations identifiant au moins une fonction mise en oeuvre par le deuxième objet ; et
- une étape d'obtention d'un module logiciel adapté au premier objet et apte à exécuter, dans l'environnement d'exécution du premier objet en utilisant des données échangées avec le deuxième objet, une fonction mise en oeuvre par le deuxième objet.

Corrélativement, l'invention propose un dispositif de mise à jour des capacités d'un premier objet connecté à un réseau de communications, destiné à être intégré dans le premier objet et comprenant :
- un module de fourniture configuré pour fournir, via le réseau de communications, des informations représentatives de capacités du premier objet, lesdites capacités comprenant des capacités liées à un environnement d'exécution du premier objet ;
- un module de réception, configuré pour recevoir via le réseau de communications, des informations représentatives de capacités d'un deuxième objet connecté au réseau de communications, ces informations identifiant au moins une fonction mise en oeuvre par le deuxième objet ;
- un module d'obtention, configuré pour obtenir un module logiciel adapté au premier objet et apte à exécuter, dans l'environnement d'exécution du premier objet en utilisant des données échangées avec le deuxième objet, une fonction mise en oeuvre par le deuxième objet.

Par « apte à exécuter une fonction du deuxième objet dans l'environnement d'exécution du premier objet », on entend que l'exécution de la fonction du deuxième objet par le module logiciel fait appel à des primitives de l'environnement d'exécution du premier objet, c'est-à-dire que le module logiciel comprend un code s'exécutant à proprement parler dans l'environnement d'exécution du premier objet. Aucune limitation n'est attachée à la nature de la fonction exécutée, il peut s'agir aussi bien d'une fonction matérielle que logicielle.

Il ne s'agit donc pas juste pour le module logiciel de communiquer avec le deuxième objet pour lui envoyer une commande d'exécution de cette fonction, mais le module logiciel est réellement apte à exécuter cette fonction localement sur le premier objet en s'interfaçant avec le deuxième objet pour échanger des données avec lui. Ainsi, lorsque la fonction est exécutée localement sur le premier objet, c'est en quelque sorte comme si le premier objet disposait en local (interne) d'une partie du deuxième objet. Toutefois au lieu de prévoir initialement cette fonction en interne dans le premier objet, l'invention permet au premier objet de l'acquérir dynamiquement.

En d'autres mots, conformément à l'invention, le premier objet récupère un automate d'exécution de la fonction du deuxième objet qui reprend toute la logique de service du deuxième objet (autrement dit toutes les routines et les primitives qui permettent d'accéder aux ressources matérielles et logicielles du deuxième objet qui lui permettent d'assurer sa fonction). Il ne récupère pas uniquement une adresse pour communiquer avec le deuxième objet comme dans l'état de la technique existant aujourd'hui qui s'emploie à faire communiquer des objets connectés. Ainsi, lorsque le deuxième objet est utilisé, un évènement est remonté au module logiciel installé sur le premier objet, et toute la logique de service associée à cet événement et permettant de gérer la progression des états du deuxième objet est mise en oeuvre localement dans le premier objet. L'échange des capacités des deux objets permet :
- au premier objet d'identifier les ressources et la ou les fonctions mises en oeuvre par le deuxième objet, et
- au deuxième objet de sélectionner un module logiciel à télécharger sur le premier objet adapté à celui-ci (par exemple conforme à un langage supporté par le premier objet ou à l'environnement d'exécution du premier objet).

Par exemple, les informations représentatives des capacités du deuxième objet sont reçues en réponse à la fourniture des informations représentatives des capacités du premier objet, et comprennent une référence de ladite au moins une fonction permettant d'accéder au module logiciel adapté au premier objet. Le module logiciel adapté au premier objet peut être sélectionné notamment par le deuxième objet à partir des capacités liées à l'environnement d'exécution du premier objet fournies par le premier objet.

Ainsi, la solution proposée par l'invention offre la possibilité d'enrichir aisément les capacités d'un premier objet connecté avec des capacités d'un deuxième objet via un réseau de communications. Cet enrichissement peut être aisément reproduit à l'infini par le premier objet avec un troisième objet, un quatrième objet, etc., l'environnement d'exécution du premier objet devenant un environnement où plusieurs modules logiciels peuvent s'exécuter en parallèle, préférentiellement de manière étanche (i.e. sans interaction entre ces modules).

Les différents objets considérés peuvent être par exemple des éléments unitaires (i.e. mettant en oeuvre une unique fonction principale, comme par exemple la mesure d'une température pour un capteur de température, l'affichage d'un flux vidéo ou d'une image pour un écran, etc.). Grâce à l'invention les fonctions de différents objets peuvent être combinées dans le temps pour fournir un service enrichi s'appuyant sur la logique de service et l'environnement d'exécution du premier objet. Ces objets peuvent avantageusement évoluer, être remplacés, etc.

En variante, certains des objets considérés peuvent être capables de mettre en oeuvre plusieurs fonctions. Dans cette variante, les informations représentatives des capacités du deuxième objet identifient alors une pluralité de fonctions mises en oeuvre par le deuxième objet, et le procédé comprend une étape de sélection par le premier objet d'au moins une fonction parmi ladite pluralité de fonctions, le module logiciel obtenu lors de l'étape d'obtention étant apte à exécuter dans l'environnement d'exécution du premier objet ladite au moins une fonction sélectionnée lors de l'étape de sélection.

L'enrichissement proposé par l'invention permet ainsi de concevoir facilement et à la volée des systèmes de communication, modulaires, évolutifs et collaboratifs. Grâce à l'invention, la capacité d'évolution de ces systèmes est infinie.

Un exemple d'application est un système de visio-conférence modulaire élaboré à partir d'une unité centrale ou CNU (Central Node Unit) composée d'une station d'accueil à laquelle on raccroche un clavier, un kit mains libres et une caméra de type webcam, etc. via un bus de communication web. Bien sûr cet exemple n'est donné qu'à titre illustratif et d'autres systèmes peuvent être conçus à partir d'objets unitaires ou non.

Le marché des objets connectés connaît aujourd'hui une forte croissance. Toutefois, si de nouveaux objets connectés apparaissent chaque jour pour de nouveaux usages, les acteurs du marché s'accordent sur le fait qu'il n'existe pas encore de perspectives fiables dans le temps ni de plans de revenus associés. Les objets connectés sont en effet livrés fonctionnels et opérationnels dans un référentiel donné, puis deviennent pour la plupart rapidement obsolètes et évoluent difficilement. L'invention offre une réelle perspective d'utilisation et d'évolution de ces objets connectés. Elle permet de concevoir des systèmes de communication disposant d'autant de capacités qu'il existe d'objets connectés avec des capacités différentes. Ces systèmes peuvent en outre être développés en s'appuyant sur une approche communautaire où des utilisateurs distincts peuvent participer à l'enrichissement de ces systèmes en développant des modules logiciels simples et hautement valorisables.

L'invention peut en outre s'appliquer à différents secteurs d'activité s'appuyant sur les télécommunications (ex. automobile, robotique, etc.) et permettre la fédération d'objets non prévus initialement au sein d'un système.

Dans un mode particulier de réalisation, le module logiciel adapté au premier objet est obtenu directement du deuxième objet. Il peut être notamment développé par le concepteur du deuxième objet et stocké dans une mémoire du deuxième objet.

En variante, le module logiciel est téléchargé à partir d'une adresse comprise dans les informations représentatives des capacités du deuxième objet. Dans un autre mode de réalisation, les données échangées entre le premier objet et le deuxième objet lors de l'exécution de la fonction sont conformes à un protocole IP (Internet Protocol).

Ce mode de réalisation est particulièrement avantageux car le protocole IP est un protocole universel couramment utilisé par les objets connectés.

Le module logiciel est par exemple un module logiciel conçu dans un langage web tel que le langage Javascript, qui peut être aisément exécuté dans un navigateur du premier objet. En variante, n'importe quel langage peut être utilisé dès lors qu'il est supporté par l'environnement d'exécution du premier objet (ex. un exécutable binaire, etc.). La découverte des capacités du premier objet par le deuxième objet permet au deuxième objet d'indiquer un module logiciel compatible avec les capacités du premier objet.

Dans un mode particulier de réalisation, le procédé de mise à jour comprend en outre une étape d'appairage du premier objet avec le deuxième objet.

Cette étape d'appairage permet de sécuriser les échanges entre les deux objets et de s'assurer de la compatibilité des objets entre eux. Elle permet de réaliser un contrôle des objets qui vont être associés.

Dans un mode de réalisation, cette étape d'appairage est basée sur une identification/authentification des objets (par exemple par la possession d'un secret partagé ou par un mécanisme de clé asymétrique) ou de leur propriétaire (par exemple par une preuve d'authentification de niveau applicatif via un mécanisme de gestion d'identité comme OpenID Connect).

Dans un autre mode de réalisation, le procédé de mise à jour comprend en outre :
- sur réception d'une requête, une étape d'activation du module logiciel de sorte à exécuter la fonction du deuxième objet ; et
- une étape de fourniture d'une réponse à la requête obtenue lors de l'exécution de la fonction du deuxième objet par le module logiciel.

Le premier objet est ainsi capable de répondre à des requêtes qui lui sont formulées en s'associant et en exécutant les fonctions du second objet bien que celles-ci ne soient pas initialement prévues dans la logique de service du premier objet.

Dans un mode particulier de réalisation, le procédé de mise à jour comprend en outre :
- une étape de mise à jour des informations relatives aux capacités du premier objet avec la fonction du deuxième objet ; et
- une étape de fourniture via le réseau de communications de ces informations mises à jour.

Autrement dit, le premier objet intègre parmi ses capacités les fonctions du deuxième objet et les publie en tant que tels auprès des autres objets connectés au réseau.

Dans un mode particulier de réalisation, les données sont fournies par le deuxième objet au module logiciel du premier objet en réponse à une requête du module logiciel et/ou à l'initiative du deuxième objet.

Ces différents modes de fonctionnement offrent une flexibilité sur les opérations pouvant être mises en oeuvre par le module logiciel et qui s'appuient sur la fonction du deuxième objet.

Dans un mode particulier de réalisation, les différentes étapes du procédé de mise à jour sont déterminées par des instructions de programmes d'ordinateurs.

En conséquence, l'invention vise aussi un programme d'ordinateur sur un support d'informations, ce programme étant susceptible d'être mis en oeuvre dans un dispositif de mise à jour ou plus généralement dans un ordinateur, ce programme comportant des instructions adaptées à la mise en oeuvre des étapes d'un procédé de mise à jour tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise aussi un procédé de communication avec un premier objet mis en oeuvre par un deuxième objet, le premier et le deuxième objet étant connectés à un réseau de communications, ce procédé comprenant :
- une étape de réception, via le réseau de communications, d'informations représentatives de capacités du premier objet, ces capacités comprenant des capacités liées à un environnement d'exécution du premier objet ;
- une étape de sélection, à partir des informations représentatives des capacités du premier objet, d'un module logiciel adapté au premier objet et apte à exécuter, dans l'environnement d'exécution du premier objet en utilisant des données échangées avec le deuxième objet, au moins une fonction mise en oeuvre par le deuxième objet ; et
- une étape de fourniture via le réseau de communications, d'informations représentatives de capacités du deuxième objet, lesdites informations identifiant ladite au moins une fonction mise en oeuvre par le deuxième objet et comprenant une référence permettant d'accéder au module logiciel adapté au premier objet et apte à exécuter ladite au moins une fonction.

Corrélativement, l'invention concerne un dispositif de communication avec un premier objet, intégré dans un deuxième objet, le premier et le deuxième objet étant connectés à un réseau de communications, ce dispositif de communication intégré dans le deuxième objet comprenant :
- un module de réception, via le réseau de communications, d'informations représentatives de capacités du premier objet, ces capacités comprenant des capacités liées à un environnement d'exécution du premier objet ;
- un module de sélection, à partir des informations représentatives des capacités du premier objet, d'un module logiciel adapté au premier objet et apte à exécuter, dans l'environnement d'exécution du premier objet en utilisant des données échangées avec le deuxième objet, au moins une fonction mise en oeuvre par le deuxième objet ; et
- un module de fourniture via le réseau de communications, d'informations représentatives de capacités du deuxième objet, ces informations identifiant ladite au moins une fonction mise en oeuvre par le deuxième objet et comprenant une référence permettant d'accéder au module logiciel adapté au premier objet et apte à exécuter ladite au moins une fonction.

L'invention vise également un système de communication comprenant une pluralité d'objets connectés à un réseau de communications, au moins un desdits objets comprenant un dispositif de mise à jour selon l'invention et au moins un desdits objets comprenant un dispositif de communication selon l'invention.

Le procédé et le dispositif de communication ainsi que le système bénéficient des mêmes avantages cités précédemment que le procédé et le dispositif de mise à jour.

On peut également envisager, dans d'autres modes de réalisation, que le procédé de mise à jour, le dispositif de mise à jour, le procédé de communication, le dispositif de communication et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de communication conforme à l'invention dans un mode particulier de réalisation ;
- la figure 2 représente l'architecture fonctionnelle des objets constituant le système de communication de la figure 1, dans un mode particulier de réalisation ;
- la figure 3 représente l'architecture matérielle des objets constituant le système de communication de la figure 1, dans un mode particulier de réalisation ; et
- la figure 4 représente, sous forme d'ordinogramme, les principales étapes d'un procédé de mise à jour selon l'invention, dans un mode particulier de réalisation.

### Description détaillée de l'invention

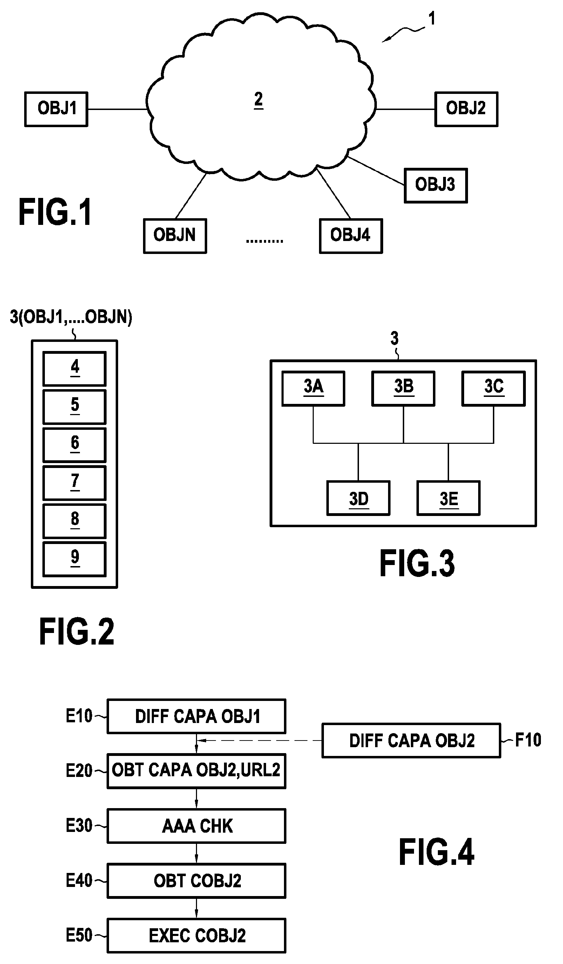

La **figure 1** représente, dans son environnement, un système de communication 1 conforme à l'invention, dans un mode particulier de réalisation.

Le système de communication 1 comprend une pluralité d'objets OBJ1, OBJ2, ..., OBJN, N désignant un entier supérieur à 1, connectés à un réseau de télécommunications 2. Le réseau de télécommunications 2 est par exemple ici le réseau public Internet.

Toutefois cette hypothèse n'est pas limitative et l'invention s'applique à d'autres réseaux de télécommunications 2, comme par exemple à un réseau local ou un réseau propriétaire. En outre, aucune limitation n'est attachée à la manière dont les objets OBJ1, OBJ2, ..., OBJN sont connectés au réseau 2 : ils peuvent l'être par le biais d'une liaison filaire ou sans fil, d'un réseau d'accès mobile ou fixe, etc.

Aucune limitation n'est attachée non plus à la nature des objets OBJ1, OBJ2,..., OBJN appartenant au système de communication 1. Il peut s'agir par exemple d'un clavier, d'une imprimante, d'un écran, d'un kit mains libres, d'un capteur, d'une station d'accueil, d'un terminal mobile, d'une application logicielle, d'un serveur dans un système informatique en nuage (aussi désigné par « cloud » en anglais), etc.

Comme illustré à la **figure 2****,** dans le mode de réalisation décrit ici, chacun de ces objets constitue une brique unitaire 3 du système de communication 1, ladite brique comprenant les éléments fonctionnels suivants :
- une unité de sécurisation 4 des échanges avec la brique unitaire 3 sur le réseau 2, apte à mettre en oeuvre un protocole de sécurité informatique AAA (Authentication Authorization Accounting) réalisant une fonction d'authentification, d'autorisation et de traçabilité. Une telle unité est connue en soi et non décrite plus en détail ici ;
- une unité de logique de service 5, configurée pour mettre en oeuvre la logique de service (autrement dit la ou les fonctions exercées par l'objet, ex. affichage pour un écran, émission de son pour un microphone, mesure de la température pour un capteur de température, etc.) associée à la brique unitaire 3. Dans le mode de réalisation décrit ici, l'unité logique de service 5 est également configurée pour diffuser sur le réseau 2 ou à un objet particulier, un inventaire des capacités de la brique unitaire 3 (matérielles et/ou logicielles). Par capacités, on fait référence ici non seulement à la ou aux fonctions assurées par la brique unitaire 3 (par exemple, fonction casque pour un kit mains libres) et son unité de logique de service 5, mais également à certaines caractéristiques/contraintes logicielles et matérielles ou encore propriétés de cette brique unitaire 3, qui peuvent être statiques et/ou dynamiques, comme par exemple les langages et/ou protocoles supportés par la brique unitaire, les librairies installées, le type d'environnement d'exécution qu'elle met en oeuvre, les éléments matériels sur lesquels s'appuient les fonctions réalisées par l'objet, la localisation de l'objet, la puissance CPU (Central Processing Unit), la batterie disponible, l'identifiant du propriétaire de l'objet (si connu), etc. ;
- un environnement d'exécution 6, comprenant par exemple un navigateur web ou tout autre type d'environnement d'exécution selon l'objet considéré et son concepteur/opérateur ;
- une unité de recherche et de découverte 7 des objets connectés au réseau 2 et de leurs capacités ;
- une unité de téléchargement 8 (dans le sens montant ou « upload » en anglais et/ou dans le sens descendant ou « download ») ;
- une unité de communication 9 sur le réseau 2 ; et
- une unité de traitement 10 des requêtes transmises à la brique unitaire 3 via le réseau 2.

Chaque brique unitaire 3 s'appuie ici, pour mettre en oeuvre ces différentes unités fonctionnelles, sur l'architecture matérielle d'un ordinateur telle qu'illustrée à la **figure 3****.** Une brique unitaire 3 comprend ainsi notamment un processeur 3A, une mémoire vive 3B de type RAM (Random Access Memory), une mémoire morte 3C de type ROM (Read Only Memory), une mémoire non volatile réinscriptible 3D dans laquelle sont stockées notamment des informations relatives aux capacités de la brique unitaire 3, et un module de communication 3E sur le réseau de communication 2, sur lequel s'appuient notamment les unités 8 de téléchargement et 9 de communication sur le réseau. Ce module de communication 3E comprend par exemple une carte réseau bien connue en soi.

Dans le mode de réalisation décrit ici, chaque brique unitaire 3 intègre un dispositif de mise à jour conforme à l'invention. La mémoire morte 3C de chaque brique constitue plus précisément un support d'enregistrement conforme à l'invention, lisible par le processeur 3A et sur lequel est enregistré un programme d'ordinateur comportant des instructions pour l'exécution des étapes d'un procédé de mise à jour selon l'invention. Ce programme d'ordinateur définit de façon équivalente les fonctions de certaines unités fonctionnelles parmi les unités 4 à 10 précédemment décrites.

De même, dans le mode de réalisation décrit ici, chaque brique unitaire 3 intègre un dispositif de communication conforme à l'invention. La mémoire morte 3C de chaque brique constitue plus précisément un support d'enregistrement, lisible par le processeur 3A et sur lequel est enregistré un programme d'ordinateur comportant des instructions pour l'exécution des étapes d'un procédé de communication selon l'invention.

Comme mentionné précédemment, l'invention permet de concevoir dynamiquement et d'enrichir de façon simple les capacités d'un système de communication en lui associant les capacités de plusieurs objets éventuellement unitaires. Nous allons maintenant décrire, en référence à la **figure 4****,** les principales étapes mises en oeuvre conformément à l'invention pour procéder à cet enrichissement. Dans l'exemple envisagé à la figure 4, on s'intéresse à l'enrichissement des capacités de l'objet OBJ1 avec les fonctions mises en oeuvre par d'autres objets du système de communication 1, et plus particulièrement ici de l'objet OBJ2. Toutefois, aucune limitation n'est attachée au nombre d'objets considérés, et les capacités de l'objet OBJ1 ou d'autres objets du système de communication 1 peuvent être enrichies à l'infini à partir des fonctions assurées par d'autres objets, comme illustré ultérieurement.

A titre uniquement illustratif, dans l'exemple envisagé ici, l'objet OBJ1 est un terminal quelconque (par exemple un terminal mobile jouant la fonction de combiné téléphonique à proprement parler) assurant la fonction de noeud central ou CNU (pour Central Node Unit) dont l'utilisateur veut accroître les capacités, tandis que l'objet OBJ2 que l'utilisateur souhaite raccorder (i.e. associer) à l'objet OBJ1 est un kit (casque) mains libres. L'objet OBJ1 met en oeuvre dans cet exemple le procédé de mise à jour selon l'invention, tandis que l'objet OBJ2 met en oeuvre le procédé de communication selon l'invention.

L'objet OBJ1 fournit (i.e. annonce) aux autres objets du système de communication 1 ses capacités (étape E10).

A cet effet, dans le mode de réalisation décrit ici, l'unité de logique de service 5 diffuse un message sur le réseau 2 par l'intermédiaire de l'unité de communication 9, ce message contenant un inventaire des capacités de l'objet OBJ1 (identifiant notamment sa fonction de CNU et les langages qu'il supporte) ainsi que des références à ces capacités. Une telle référence peut être par exemple un identifiant, et/ou une adresse (ex. URL (Uniform Resource Locator)) permettant d'accéder à la capacité considérée, etc. Par exemple, l'unité 5 diffuse parmi les capacités de l'objet OBJ1 :
- des capacités en liaison avec les propriétés à proprement parler de l'objet, comme par exemple des propriétés statiques telles que la fonction de l'objet, ou un identifiant de l'objet, et/ou des propriétés dynamiques telles qu'un identifiant du propriétaire de l'objet) si connu, la localisation de l'objet, etc. ;
- des capacités liées à l'environnement d'exécution 6 de l'objet, comme par exemple des propriétés statiques telles que le ou les langages supportés, les librairies installées, la puissance CPU, et/ou des propriétés dynamiques telles que le niveau de batterie disponible, etc.

La diffusion des capacités de l'objet OBJ1 sur le réseau 2 est déclenchée par exemple sur commande de l'utilisateur de l'objet OBJ1 (ex. via un bouton ou la sélection d'un menu approprié).

L'objet OBJ2 reçoit et analyse le message diffusé par l'objet OBJ1 par l'intermédiaire de son unité de recherche et de découverte 7 : en particulier ici, il extrait du message diffusé par l'objet OBJ1 les langages supportés par l'objet OBJ1 et par son environnement d'exécution 6. L'objet OBJ2 répond à ce message via son unité de logique de service 5 en diffusant à son tour de manière similaire sur le réseau 2, un inventaire de ses capacités (identifiant notamment la ou les fonctions qu'il met en oeuvre) et les références de ses capacités (suivant la même typologie que celle utilisée par l'objet OBJ1 pour diffuser ses capacités mais les capacités diffusées de l'objet OBJ2 peuvent être en nombre et/ou de natures différentes) (étape F10). Il indique notamment parmi ses capacités sa fonction de kit mains libres et fournit comme référence de cette fonction une adresse URL2 permettant d'accéder à un module logiciel COBJ2 apte à exécuter cette fonction dans l'environnement d'exécution 6 de l'objet OBJ1. Le module logiciel COBJ2 est sélectionné par l'objet OBJ2 en fonction des langages supportés par l'objet OBJ1 et par son environnement d'exécution 6 extraits par l'objet OBJ2 lors de son analyse du message diffusé par l'objet OBJ1. Dans le mode de réalisation décrit ici, l'objet OBJ2 diffuse également dans le message un certificat qui lui a été accordé par une autorité de confiance et les clés de chiffrement nécessaires à l'établissement d'échanges sécurisés avec l'objet OBJ1.

Le module logiciel COBJ2 est adapté au premier objet OBJ1 et plus particulièrement à son environnement d'exécution 6 et aux langages qu'il supporte. Il est programmé de sorte à faire appel aux primitives de l'environnement d'exécution 6 de l'objet OBJ1. Ainsi par exemple, si l'environnement d'exécution 6 de l'objet OBJ1 est un navigateur web, le module logiciel COBJ2 auquel l'objet OBJ2 fait référence dans son message de réponse à l'objet OBJ1 est un module logiciel COBJ2 Javascript pouvant être exécuté à partir du navigateur web de l'objet COBJ1. En variante, d'autres versions du module logiciel COBJ2 dans d'autres langages peuvent être envisagées et développées par le concepteur de l'objet logiciel OBJ2 de sorte à pouvoir s'adapter à différents environnements d'exécution. Ainsi par exemple si l'objet OBJ1 est un terminal mobile, le module logiciel COBJ2 peut prendre la forme d'un exécutable (.exe), d'un code apk, d'un code binaire, etc.

Dans un mode de réalisation particulier, l'environnement d'exécution 6 de l'objet OBJ1 est un environnement d'exécution de containers, et le module logiciel COBJ2 est le code d'un container exécutable dans ce module, par exemple au format Docker.

Le module logiciel COBJ2 comprend toute la logique de service de l'objet OBJ2 associée à sa fonction de kit mains libres. Par logique de service on entend l'automate d'exécution de la fonction de l'objet OBJ2, autrement dit encore les différentes opérations effectuées par l'objet OBJ2 dans le cadre de sa fonction de kit mains libres ici et qui font appel via des commandes appropriées aux éléments matériels et/ou logiciels de l'objet OBJ2 (casque, microphone). Cette logique de service est programmée pour s'exécuter en faisant appel aux primitives de l'environnement d'exécution 6 de l'objet OBJ1 tout en sollicitant les ressources matérielles et logicielles de l'objet OBJ2 qui lui permettent d'assurer sa fonction de kit mains libres, autrement dit tout en communiquant avec l'objet OBJ2 et échangeant avec lui des données pour remplir cette fonction. Cette communication peut être mise en oeuvre en utilisant des interfaces de type API (Application Programming Interface) de l'objet OBJ2, intégrées dans le module logiciel COBJ2.

Le module logiciel COBJ2 peut comprendre en outre d'autres opérations en complément de la logique de service de l'objet OBJ2. Par exemple, pour un objet de type capteur de température, la logique de service de ce dernier consiste, sur réception d'une requête de température, à répondre en donnant la température mesurée. Une opération complémentaire peut consister à émettre une telle requête périodiquement par exemple. Selon un autre exemple, pour un kit mains libres, le module logiciel COBJ2 peut comprendre différents mécanismes logiciels de traitement audio (ex. codecs, annulation d'écho, etc.) permettant de tirer parti au mieux de ce kit mains libres via des mécanismes propriétaires. Autrement dit, ce module logiciel ne permet pas uniquement de fournir les capacités matérielles du kit mains libres à l'objet OBJ1 mais également un logiciel plus élaboré qui implémente des mécanismes permettant de tirer parti de ces capacités.

L'objet OBJ1 reçoit le message diffusé par l'objet OBJ2 puis, par l'intermédiaire de son unité de recherche et de découverte 7, écoute et analyse ce message : en particulier ici, il extrait du message diffusé par l'objet OBJ2, l'adresse URL2 du module logiciel COBJ2 (étape E20), les clés de chiffrement et le certificat de l'objet OBJ2.

Puis l'objet OBJ1 par le biais de son unité de sécurisation 4, met en oeuvre une procédure d'appairage avec l'objet OBJ2 en utilisant le certificat et les clés de chiffrement ainsi extraits de la réponse de l'objet OBJ2 (étape E30). Cette procédure s'appuie ici sur le protocole AAA connu en soi et non décrit en détail ici. Il vise à contrôler que les objets OBJ1 et OBJ2 sont bien compatibles dans le sens où ils sont autorisés à s'associer et à communiquer. Cet appairage permet également d'établir un canal sécurisé entre les objets OBJ1 et OBJ2 via le réseau de communication 2. Il est réalisé par une suite d'échanges connue en soi entre l'unité de sécurisation 4 de l'objet OBJ1 et l'unité de sécurisation 4 de l'objet OBJ2.

Dans un mode particulier de réalisation, cette étape d'appairage est basée sur une identification/authentification des objets (par exemple par la possession d'un secret partagé ou par un mécanisme de clé asymétrique) ou de leur propriétaire (par exemple par une preuve d'authentification de niveau applicatif via un mécanisme de gestion d'identité comme OpenID Connect), mise en oeuvre par les unités de sécurisation 4 des objets.

A l'issue de cet appairage, l'objet OBJ1 par le biais de son unité de téléchargement 8 obtient le module logiciel COBJ2 en utilisant l'adresse URL2 fournie par l'objet OBJ2 (étape E40).

En variante, le module logiciel COBJ2 est stocké dans une mémoire de l'objet OBJ1 (ex. dans sa mémoire non volatile 3D), et est envoyé par l'objet OBJ2 sur requête de l'objet OBJ1 à l'unité de téléchargement 8 de l'objet OBJ2, via le réseau 2. Dans une autre variante encore, cet envoi est réalisé sans nécessiter de requête de l'objet OBJ1 à l'issue de l'appairage.

Le module logiciel COBJ2 est stocké en mémoire de l'objet OBJ1, par exemple dans sa mémoire non volatile 3D et installé dans l'environnement d'exécution 6 de l'objet OB1 pour y être exécuté (étape E50).

L'exécution du module logiciel COBJ2 dans l'environnement d'exécution 6 de l'objet OBJ1 permet à l'OBJ1 d'exécuter la fonction de l'objet OBJ2, autrement dit ici la fonction de kit mains libres, en utilisant virtuellement les ressources (capacités) de l'objet OBJ2 via l'échange de données avec l'objet OBJ2 sur un lien sécurisé établi sur le réseau 2 grâce à l'appairage préalablement réalisé entre les deux objets. Les deux objets peuvent maintenant aisément communiquer entre eux, via par exemple un protocole propriétaire développé par le concepteur de l'objet OBJ2, grâce au module logiciel COBJ2 exécuté dans l'environnement d'exécution 6 de l'objet OBJ1. Ce protocole préférentiellement s'appuie sur le protocole IP (Internet Protocol) et sur les protocoles de transport TCP (Transport Control Protocol) ou UDP (User Datagram Protocol). Toutefois bien entendu, d'autres protocoles peuvent être envisagés en variante.

Les échanges de données entre les deux objets OBJ1 et OBJ2 peuvent être liés par exemple à des requêtes émises par l'objet OBJ1 pour obtenir des informations sur l'état des ressources par exemple de l'objet OBJ2, ou à des commandes envoyées par l'unité de logique de service 5 de l'objet OBJ1 dans le cadre de la fonction de l'objet OBJ2 qu'il exerce. Ainsi par exemple, sur réception d'une requête relative à la fonction de l'objet OBJ2 par l'unité 10 de traitement des requêtes de l'objet OBJ1 (ex. utilisation du kit mains libres), l'unité 5 de logique de service de l'objet OBJ1 active le module logiciel COBJ2 de sorte à exécuter la fonction de l'objet OBJ2 et à obtenir et à fournir lors de cette exécution une réponse à la requête reçue.

Les échanges de données entre les deux objets OBJ1 et OBJ2 peuvent également être à l'initiative de l'objet OBJ2. Il peut s'agir par exemple d'événements détectés et reportés par l'objet OBJ2 à l'automate exécuté par le module logiciel COBJ2, etc.

Pour mieux comprendre le fonctionnement de l'invention, on suppose à titre illustratif que le combiné de l'objet OBJ2 est décroché. L'objet OBJ1 exécutant la logique de service de l'objet OBJ2, un événement associé à ce décrochage est remonté vers le module logiciel COBJ2, puis vers l'unité 5 de logique de service de l'objet OBJ1 qui gère la progression des états de l'objet OBJ2 par l'intermédiaire de la fonction (automate) implémentée dans le module logiciel COBJ2. Les échanges entre l'automate du module logiciel COBJ2 et l'unité 5 de logique de service de l'objet OBJ1 sont réalisés en local dans l'objet OBJ1, bien que s'appuyant sur des échanges de données avec l'objet OBJ2 qui disposent physiquement des ressources permettant d'exécuter la fonction de l'objet OBJ2. Autrement dit, c'est comme si virtuellement, l'objet OBJ1 disposait des ressources matérielles (et éventuellement logicielles) de l'objet OBJ2, mais c'est l'objet OBJ1 qui exécute toute la logique de service associée à la fonction de l'objet OBJ1 (gestion des automates, etc.).

Dans un mode particulier de réalisation, à l'issue de l'étape E50, l'objet OBJ1 met à jour les informations (ex. la liste) concernant ses capacités de sorte à y inclure les capacités de l'objet OBJ2 qui lui sont maintenant virtuellement rattachées. Ce sont ces informations mises à jour incluant les capacités de l'objet OBJ2 qui sont alors diffusées sur le réseau 2 lorsque l'objet OBJ1 informe les autres objets connectés au réseau de ses capacités.

On note que dans les exemples détaillés ici, les objets implémentent au moins une fonction, et la logique de service qui permet l'exécution de ladite au moins une fonction est reprise (i.e. implémentée) dans un unique module logiciel. Dans une variante, les capacités de l'objet OBJ2 peuvent identifier une pluralité de fonctions mises en oeuvre par l'objet OBJ2, les logiques de service permettant l'exécution de chacune de ces différentes fonctions pouvant être reprises dans un ou plusieurs modules logiciels. Le procédé de mise à jour mis en oeuvre par l'objet OBJ1 peut alors comprendre une étape de sélection par l'objet OBJ1 d'au moins une fonction parmi ladite pluralité de fonctions identifiées par l'objet OBJ2, et le module logiciel obtenu lors de l'étape d'obtention étant dès lors apte à exécuter dans l'environnement d'exécution de l'objet OBJ1 ladite au moins une fonction sélectionnée lors de l'étape de sélection.

Le procédé selon l'invention peut bien entendu être reproduit plusieurs fois, avec d'autres objets.

Ainsi par exemple, on peut envisager dans l'exemple considéré ici, le raccordement au premier objet OBJ1 d'un troisième objet OBJ3 de type station d'accueil pour le chargement du terminal mobile et d'un quatrième objet OBJ4 de type application de softphonie destinée à être installée en local sur l'objet OBJ1.

Selon cet exemple, les étapes E10 à E50 sont reproduites de façon identique pour raccorder les objets OBJ1 et OBJ3 à celle décrite précédemment pour le raccordement des objets OBJ1 et OBJ2. A l'issue de ces étapes, l'objet OBJ1 exécute dans son environnement d'exécution 6 un module logiciel COBJ3 adapté au premier objet et apte à exécuter dans cet environnement la fonction du troisième objet OBJ3 (i.e. charge d'un terminal) en utilisant des données échangées avec le troisième objet OBJ3.

Pour le raccordement de l'objet OBJ4 à l'objet OBJ1, on réalise ici les étapes E10 à E50 en attribuant le rôle de l'objet OBJ1 à l'objet OBJ4 et celui de l'objet OBJ2 à l'objet OBJ1. Ainsi, l'objet OBJ4 obtient, après la découverte des capacités des deux objets et leur appairage, un module logiciel COBJ1 apte à exécuter la fonction de l'objet OBJ1 dans l'environnement d'exécution 6 de l'objet OBJ4. Autrement dit, la logique de service de l'objet OBJ4 exécute à l'issue de l'étape E50 localement dans l'objet OBJ4 le module logiciel COBJ1 et la fonction associée à l'objet OBJ1. La logique de service de l'objet OBJ4 exerce ainsi les fonctions de softphonie dans l'objet OBJ4, tandis que l'objet OBJ1, par le biais de son raccordement aux objets OBJ2 et OBJ3, exerce les fonctions de combiné mains libres et recharge du mobile. Il convient de noter que dans l'exemple envisagé ici, les interactions entre l'objet OBJ1 et l'objet OBJ4 ont lieu en local, à l'intérieur du terminal.

On peut ainsi combiner à l'infini grâce à l'invention les capacités de divers objets unitaires (c'est-à-dire qui implémentent au moins une fonction) et réaliser aisément des systèmes évolutifs s'appuyant sur des objets connectés.

## Revendications

1. Procédé de mise à jour des capacités d'un premier objet (OBJ1) connecté à un réseau de communications (2), destiné à être mis en oeuvre par le premier objet et comprenant :
- une étape de fourniture (E10), via le réseau de communications, d'informations représentatives de capacités du premier objet, lesdites capacités comprenant des capacités liées à un environnement d'exécution du premier objet ;
- une étape de réception (F10) via le réseau de communications, d'informations représentatives de capacités d'un deuxième objet (OBJ2) connecté au réseau de communications, lesdites informations identifiant au moins une fonction mise en oeuvre par le deuxième objet ;
- une étape d'obtention (E40) d'un module logiciel (COBJ2) adapté au premier objet et apte à exécuter, dans l'environnement d'exécution du premier objet en utilisant des données échangées avec le deuxième objet, une fonction mise en oeuvre par le deuxième objet.

2. Procédé selon la revendication 1 dans lequel les informations représentatives des capacités du deuxième objet sont reçues en réponse à la fourniture des informations représentatives des capacités du premier objet, et comprennent une référence de ladite au moins une fonction permettant d'accéder audit module logiciel adapté au premier objet.

3. Procédé selon la revendication 1 ou 2 dans lequel le module logiciel adapté au premier objet est sélectionné par le deuxième objet à partir des capacités liées à l'environnement d'exécution du premier objet fournies par le premier objet.

4. Procédé selon l'une quelconque des revendications 1 à 3 dans lequel les informations représentatives des capacités du deuxième objet identifient une pluralité de fonctions mises en oeuvre par le deuxième objet, ledit procédé comprenant une étape de sélection par le premier objet d'au moins une fonction parmi ladite pluralité de fonctions, le module logiciel obtenu lors de l'étape d'obtention étant apte à exécuter dans l'environnement d'exécution du premier objet ladite au moins une fonction sélectionnée lors de l'étape de sélection.

5. Procédé selon l'une quelconque des revendications 1 à 4 dans lequel le module logiciel (COBJ1) adapté au premier objet est obtenu directement du deuxième objet (OBJ2) ou téléchargé à partir d'une adresse (URL2) comprise dans les informations représentatives des capacités du deuxième objet.

6. Procédé selon l'une quelconque des revendications 1 à 5 dans lequel les données échangées entre le premier objet et le deuxième objet lors de l'exécution de la fonction sont conformes à un protocole IP (Internet Protocol).

7. Procédé selon l'une quelconque des revendications 1 à 6 dans lequel lesdites informations représentatives des capacités d'un objet comprennent :
- au moins une ressource matérielle et/ou logicielle de l'objet utilisée pour assurer sa fonction ; et/ou
- un identifiant de l'objet.

8. Procédé selon l'une quelconque des revendications 1 à 7 dans lequel des données sont fournies par le deuxième objet au module logiciel du premier objet en réponse à une requête du module logiciel et/ou à l'initiative du deuxième objet.

9. Procédé selon l'une quelconque des revendications 1 à 8 comprenant en outre une étape d'appairage (E30) du premier objet avec le deuxième objet.

10. Procédé selon l'une quelconque des revendications 1 à 9 comprenant en outre :
- sur réception d'une requête, une étape d'activation du module logiciel de sorte à exécuter la fonction du deuxième objet ; et
- une étape de fourniture d'une réponse à ladite requête obtenue lors de l'exécution de ladite fonction du deuxième objet par le module logiciel.

11. Procédé selon l'une quelconque des revendications 1 à 10 comprenant en outre :
- une étape de mise à jour des informations relatives aux capacités du premier objet avec la fonction du deuxième objet ; et
- une étape de fourniture via le réseau de communications de ces informations mises à jour.

12. Programme d'ordinateur comportant des instructions pour l'exécution des étapes du procédé de mise à jour selon l'une quelconque des revendications 1 à 11 lorsque ledit programme est exécuté par un ordinateur.

13. Support d'enregistrement lisible par un ordinateur sur lequel est enregistré un programme d'ordinateur comprenant des instructions pour l'exécution des étapes du procédé de mise à jour selon l'une quelconque des revendications 1 à 11.

14. Procédé de communication avec un premier objet (OBJ1) mis en oeuvre par un deuxième objet, le premier et le deuxième objet étant connectés à un réseau de communications (2), ledit procédé comprenant :
- une étape de réception, via le réseau de communications, d'informations représentatives de capacités du premier objet, ces capacités comprenant des capacités liées à un environnement d'exécution du premier objet ;
- une étape de sélection, à partir des informations représentatives des capacités du premier objet, d'un module logiciel adapté au premier objet et apte à exécuter, dans l'environnement d'exécution du premier objet en utilisant des données échangées avec le deuxième objet, au moins une fonction mise en oeuvre par le deuxième objet ; et
- une étape de fourniture via le réseau de communications, d'informations représentatives de capacités du deuxième objet (OBJ2), lesdites informations identifiant ladite au moins une fonction mise en oeuvre par le deuxième objet et comprenant une référence permettant d'accéder au module logiciel adapté au premier objet et apte à exécuter ladite au moins une fonction.

15. Dispositif de mise à jour des capacités d'un premier objet (OBJ1) connecté à un réseau de communications, intégré dans le premier objet et comprenant :
- un module de fourniture configuré pour fournir, via le réseau de communications, des informations représentatives de capacités du premier objet, lesdites capacités comprenant des capacités liées à un environnement d'exécution du premier objet ;
- un module de réception, configuré pour recevoir via le réseau de communications, des informations représentatives de capacités d'un deuxième objet connecté au réseau de communications, lesdites informations identifiant au moins une fonction mise en oeuvre par le deuxième objet ;
- un module d'obtention, configuré pour obtenir un module logiciel adapté au premier objet et apte à exécuter, dans l'environnement d'exécution du premier objet en utilisant des données échangées avec le deuxième objet, une fonction mise en oeuvre par le deuxième objet.

16. Dispositif de communication avec un premier objet (OBJ1), intégré dans un deuxième objet, le premier et le deuxième objet étant connectés à un réseau de communications (2), ledit dispositif de communication intégré dans le deuxième objet comprenant :
- un module de réception, via le réseau de communications, d'informations représentatives de capacités du premier objet, ces capacités comprenant des capacités liées à un environnement d'exécution du premier objet ;
- un module de sélection, à partir des informations représentatives des capacités du premier objet, d'un module logiciel adapté au premier objet et apte à exécuter, dans l'environnement d'exécution du premier objet en utilisant des données échangées avec le deuxième objet, au moins une fonction mise en oeuvre par le deuxième objet ; et
- un module de fourniture via le réseau de communications, d'informations représentatives de capacités du deuxième objet (OBJ2), lesdites informations identifiant ladite au moins une fonction mise en oeuvre par le deuxième objet et une référence permettant d'accéder au module logiciel adapté au premier objet et apte à exécuter ladite au moins une fonction.

17. Système de communication (1) comprenant une pluralité d'objets (OBJ1,OBJ2,...,OBJN) connectés à un réseau de communications, au moins un desdits objets comprenant un dispositif selon la revendication 15 et au moins un desdits objets comprenant un dispositif selon la revendication 16.
